# EUROPEAN PATENT SPECIFICATION

(11) **EP 3 238 864 B1**
(45) Date of publication and mention of the grant of the patent: **19.02.2020**
(21) Application number: 17162888.6
(22) Date of filing: 24.03.2017
(51) Int. Cl.: B29C 64/165, B29C 64/357, B33Y 70/00, B33Y 40/00, B33Y 10/00, B22F 3/00, B22F 3/24, B29C 64/153

(54) **APPARATUS AND METHOD FOR FABRICATING THREE-DIMENSIONAL OBJECTS**
VORRICHTUNG SOWIE VERFAHREN ZUM HERSTELLEN DREIDIMENSIONALER OBJEKTE
APPAREIL ET PROCÉDÉ DE FABRICATION D'OBJETS TRIDIMENSIONNELS

(30) Priority: 26.04.2016 JP 2016088051; 06.02.2017 JP 2017019622
(43) Date of publication of application: 01.11.2017
(73) Proprietor: Ricoh Company, Ltd., Tokyo 143-8555 (JP)
(72) Inventor: SAKURA, Shozo, Ohta-ku, Tokyo 143-8555 (JP)
(74) Representative: White, Duncan Rohan

(56) References cited:
- WO-A1-2015/108544
- WO-A2-2015/100085
- US-A1- 2015 071 809

## Description

### BACKGROUND

### Technical Field

Aspects of the present disclosure relate to a system and a method for fabricating three-dimensional objects.

### Related Art

A three-dimensional fabricating apparatus is known that forms a three-dimensional object by repeated laminating of a plurality of layers. More specifically, the object is formed by repeatedly forming a powder layer with fabrication powder and binding particles of the powder together in accordance with fabrication information instructions for each such layer.

For example, JP-3943315-B1 (JP-2002-038201-A) discloses a three-dimensional fabricating apparatus that forms a sintered layer by a process of irradiating optical beam to a predetermined portion of a powder layer, powder of which is made of inorganic matter or organic matter, covering the sintered layer with a new powder layer, and irradiating an optical beam to the predetermined portion of the new powder layer to form a new sintered layer. The above described process is repeated to form the three-dimensional object.

In order to smooth a surface of the three-dimensional object, powder attached around the sintered layer is removed to expose a side face of the sintered layer. Then, the three-dimensional fabricating apparatus irradiates an optical beam to the side face of the sintered layer to melt and solidify the remaining powder attached on the side face of the sintered layer.

Further, in order to improve surface hardness or corrosion resistance, surface modification is performed by spraying surface modification material to the side face of the sintered layer. The surface modification material is mixed or reacted with the powder on the side face of the sintered layer. Then the three-dimensional fabricating apparatus irradiates the optical beam to the side face of the sintered layer, on which the surface modification material is applied.

Although the three-dimensional fabricating apparatus as disclosed in JP-3943315-B (JP-2002-038201-A) can reduce unevenness of the surface of the three-dimensional object by melting and solidifying the powder (fabrication powder) remained on the side face of the sintered layer, the smoothness of the three-dimensional object is not enough. For example, granular feeling of the powder may be remained on the side face of the sintered layer even after the melting and solidifying process is performed. The three-dimensional object, on which the surface modification is performed, also has the granular feeling of the powder.

US-A-2015/0071809 discloses a method of forming a 3D article. WO-A-2015/100085 discloses methods and systems for 3D printing utilizing a jetted-particle binder fluid. WO2015/108544 discloses a polymeric powder composition for 3D printing.

### SUMMARY

The invention provides a system in accordance with claim 1 and a method in accordance with claim 8.

According to the three-dimensional fabricating apparatus according to the present disclosure, a three-dimensional object having a smooth surface can be obtained.

### BRIEF DESCRIPTION OF THE DRAWINGS

FIG. 1 is a perspective view of a three-dimensional fabricating apparatus according to a first embodiment of the present disclosure;
FIG. 2 is a schematic view of a step in a process of forming a fabrication layer;
FIG. 3 is a schematic view of a step in a process of forming a thin layer of a fabrication powder on a formed fabrication layer;
FIG. 4 is a flowchart of steps in a fabrication process according to the embodiment of the present disclosure;
FIG. 5 is a schematic view of a surface portion of a three-dimensional object, on which small-diameter-particle powder is deposited;
FIG. 6 is a schematic view of a three-dimensional object fabricated according to three-dimensional shape data;
FIG. 7 is a schematic view of a status when a final laminated object (three-dimensional object) is fabricated in a fabrication chamber;
FIG. 8 is a schematic view of a heating apparatus;
FIG. 9 is a perspective view of a small-diameter-particle powder supply apparatus according to the embodiment of the present disclosure;
FIG. 10 a perspective view of an adhesive spray apparatus;
FIG. 11 is a schematic view of a small-diameter-particle powder supply apparatus according to another embodiment of the present disclosure; and
FIG. 12 is a schematic view of a recovery apparatus according to an embodiment of the present disclosure.

### DETAILED DESCRIPTION

Hereinafter, a three-dimensional fabricating apparatus according to an embodiment of the present disclosure will be described referring to accompanying drawings.

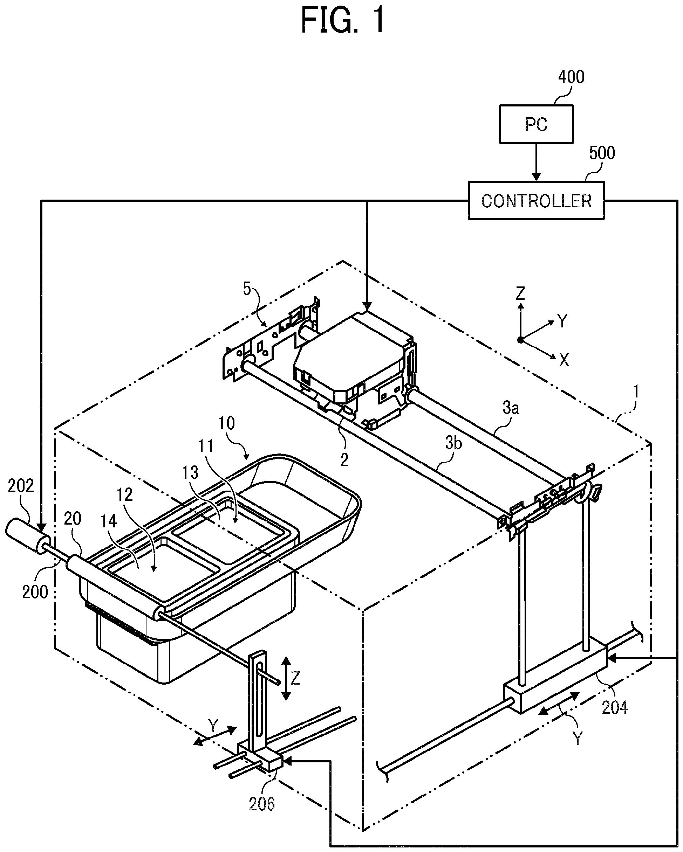

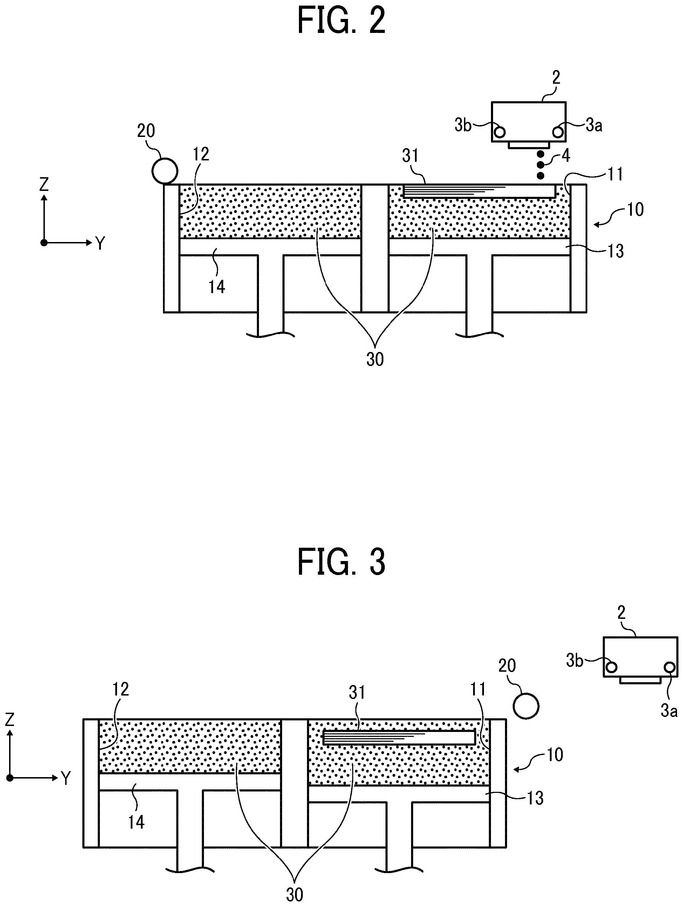

FIG. 1 is a perspective view of a three-dimensional fabricating apparatus 1 according to the present embodiment. FIG. 2 is a schematic view illustrating a step in a process of forming a fabrication layer by binding fabrication powder 30 of a portion based on fabrication information using the three-dimensional fabricating apparatus 1 of the present embodiment. FIG. 3 is a schematic view illustrating a step in a process of forming a thin layer of fabrication powder 30 on a formed fabrication layer.

The three-dimensional fabricating apparatus 1 of the present embodiment includes a head unit 5, a powder chamber 10, and a recoat roller 20.

The head unit 5 includes a liquid discharge head 2. The liquid discharge head 2 discharges fabrication liquid 4. The powder chamber 10 stores fabrication powder 30. The fabrication liquid 4 acts as binding agent, which solidifies the fabrication powder 30 stored in the powder chamber 10. The liquid discharge head 2 is movable along guide rods 3a and 3b extending along a direction indicated by arrow X in FIG. 1.

A known liquid discharge head used for a printing head of an inkjet recording apparatus can be used as the liquid discharge head 2. Virtually any type of liquid discharge head can be used in the present embodiment so long as the liquid discharge head can discharge fabrication liquid 4.

The powder chamber 10 includes a fabrication chamber 11 and a supply chamber 12. The fabrication chamber 11 is used for fabricating a three-dimensional object. The supply chamber 12 stores the fabrication powder 30 supplied to the fabrication chamber 11. The fabrication chamber 11 includes a fabrication stage 13 in the fabrication chamber 11. The fabrication stage 13 is driven to move a bottom face of the fabrication chamber 11 upward and downward in a vertical direction indicated by arrow Z in FIG. 1. The supply chamber 12 includes a supply stage 14 in the supply chamber 12. The supply stage 14 is driven to move a bottom face of the supply chamber 12 upward and downward in the direction indicated by arrow Z.

The recoat roller 20 has a rotation shaft 200 extending in the direction indicated by arrow X in FIG. 1. A motor 202 drives and rotates the recoat roller 20 around the rotation shaft 200.

The head unit 5 and the powder chamber 10 are movable relative to each other by a first drive unit 204 in a direction indicated by arrow Y in FIG. 1. Here, the first drive unit 204 illustrated in FIG. 1 moves the head unit 5 relative to the powder chamber 10 in the direction indicated by arrow Y. However, the first drive unit 204 may move the powder chamber 10 relative to the head unit 5.

Further, the first drive unit 204 may move both of the head unit 5 and the powder chamber 10 relative to each other. Further, the recoat roller 20 and the powder chamber 10 are movable relative to each other by a second drive unit 206 in the directions indicated by arrow Y and Z in FIG. 1. The second drive unit 206 moves the recoat roller 20 in the direction indicated by arrow Y in FIG. 1. However, the second drive unit 206 may move the powder chamber 10 or move both of the recoat roller 20 and the powder chamber 10 in the direction indicated by arrow Y in FIG. 1.

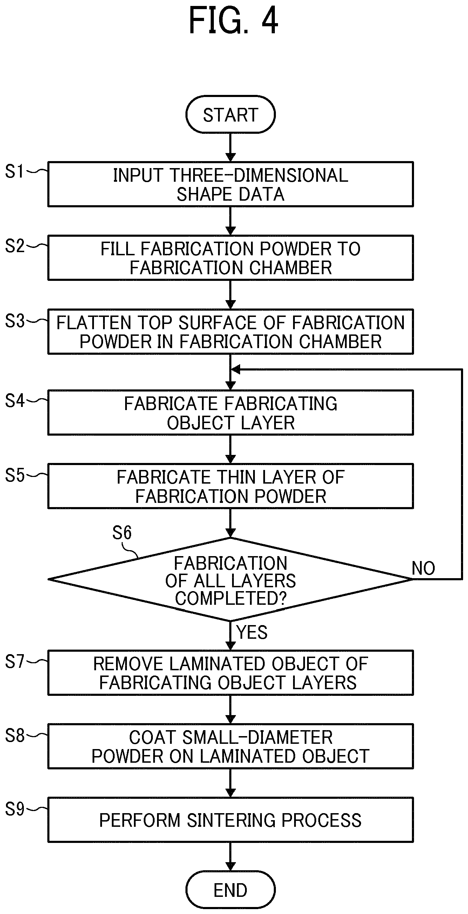

FIG. 4 is a flowchart of steps in a fabrication process (including smoothing process) executed by the three-dimensional fabricating apparatus 1 according to the present embodiment.

Three-dimensional shape data (fabrication information) of the three-dimensional object 32, which is fabricated by the three-dimensional fabricating apparatus 1 of the present embodiment, is input to the three-dimensional fabricating apparatus 1 from an external device such as a personal computer 400. The personal computer 400 is communicatively connected to the three-dimensional fabricating apparatus 1 in a wired or wireless manner (S1) as illustrated in FIG. 1.

A controller 500 of the three-dimensional fabricating apparatus 1 generates data (fabrication slice data) of a large number of object layers 31 decomposed in the vertical direction based on the input three-dimensional shape data input to the apparatus 1 from the external device such as the personal computer 400. The generated slice data corresponds to each of the object layers 31 formed by solidifying the fabrication powder 30 with the fabrication liquid 4 discharged from the liquid discharge head 2 of the three-dimensional fabricating apparatus 1. The thickness of the object layer 31 is determined by the design of the three-dimensional fabricating apparatus 1.

First, the fabrication chamber 11 is filled with fabrication powder 30 by moving the powder inside the supply chamber 12 to the fabrication chamber 11 with the recoat roller 20 when the fabrication stage 13 in the fabrication chamber 11 is positioned at a predetermined height when fabricating a three-dimensional object (S2). Then, a top face of the fabrication powder 30 in the fabrication chamber 11 is flattened by the recoat roller 20, which is driven and rotated by the motor 202, in the direction indicated by arrow Y relative to the powder chamber 10 (S3).

Then, the controller 500 moves the head unit 5 in the direction indicated by arrow Y relative to the powder chamber 10 to the predetermined position above the fabrication chamber 11. The controller 500 further discharges the fabrication liquid 4 selectively on the portion according to the three-dimensional shape data (slice data) of the three-dimensional object while scanning the liquid discharge head 2 in the head unit 5 in the direction indicated by arrow X.

After completing the discharging process of one line or a plurality of lines by discharging the fabrication liquid 4 while scanning the liquid discharge head 2 in the head unit 5 in the direction indicated by arrow X, the controller 500 moves the head unit 5 relative to the powder chamber 10 in the direction indicated by arrow Y. Then, the controller 500 performs the discharge process of one line or a plurality of lines in the direction indicated by arrow X again.

By repeating the discharging process described above, the controller 500 discharges the fabrication liquid 4 from the liquid discharge head 2 selectively on a portion in an X and Y plane according to the three-dimensional shape data (slice data). As a result, the particles of the fabrication powder 30 of the portion on which the fabrication liquid 4 is discharged are bound and solidified to form one object layer 31.

Next, the controller 500 moves the supply stage 14 upward, moves the fabrication stage downward, and moves the powder chamber 10 and the recoat roller 20 relatively in the direction indicated by arrow Y. The rotating recoat roller 20 thereby transfers the upper layer portion of the fabrication powder 30 to the fabrication chamber 11 from the supply chamber 12. Further, the recoat roller 20 flattens the top face of the fabrication powder 30 transferred to the fabrication chamber 11. As a result, a thin layer of the fabrication powder 30 is formed over the previously formed object layer 31 in the fabrication chamber 11 as illustrated in FIG. 3.

Again, the controller 500 discharges the fabrication liquid 4 selectively on the portion according to the three-dimensional shape data (slice data) with the liquid discharge head 2 while moving the liquid discharge head 2 of the head unit 5 in the direction indicated by arrow X. The controller 500 thereby forms a new object layer 31 over the previously formed object layer 31. The processes described above are repeated, and the controller 500 laminates a plurality of object layers 31 and forms a laminated object including multiple object layers 31. Then, the controller executes a smoothing process to smooth the surface of the laminated object.

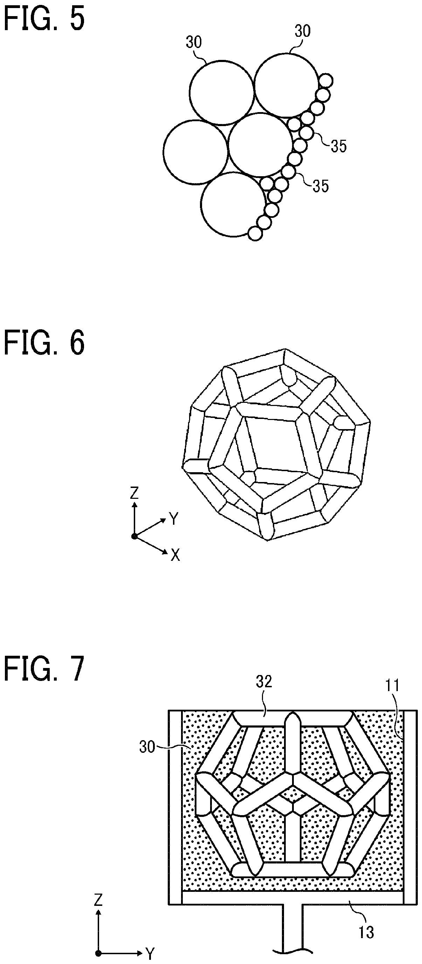

FIG. 5 is a schematic view of a surface portion of a three-dimensional object, on which small-diameter-particle powder is deposited. The smoothing process of the present embodiment is a process of supplying small-diameter-particle powder 35 to the surface of the previously formed laminated object and bind the small-diameter-particle powder 35 to the surface of the laminated object. The average particle diameter of the small-diameter-particle powder 35 is smaller than the average particle diameter of the fabrication powder 30. As illustrated in FIG. 5, the smoothing process smoothing a surface of the laminated object by inserting and filling the small-diameter-particle powder 35 into the asperities in the surface of the laminated object.

In the present embodiment, the smoothing process is performed after completing the fabrication of the final laminated object according to the input three-dimensional shape data (three-dimensional object). However, the smoothing process can be performed during a halfway stage of the fabrication of the laminated object, and the final laminated object is fabricated by laminating the remaining portion of the fabrication layers.

Next, examples of a smoothing process will be described in further detail bellow.

The present embodiment fabricates a final laminated object (three-dimensional object) in the fabrication chamber 11 as illustrated in FIG. 7 by executing the fabrication process according to the three-dimensional shape data corresponding to the three-dimensional object as illustrated in FIG. 6. In this way, after fabricating the three-dimensional object 32 (YES at S6 in FIG. 4), the smoothing process removes any surplus fabrication powder 30, to which the fabrication liquid 4 is not applied, from the three-dimensional object 32 by taking out the three-dimensional object 32 from the fabrication chamber 11 (S7 in FIG. 4).

Next, the three-dimensional object 32 taken out from the fabrication chamber 11 is transferred to a small-diameter-particle powder supply apparatus 600 for coating the small-diameter-particle powder 35 on the three-dimensional object 32 (S8 in FIG. 4). The small-diameter-particle powder supply apparatus 600 coats the small-diameter-particle powder 35 on the surface of the three-dimensional object 32 taken out from the fabrication chamber 11. As a material used for the small-diameter-particle powder 35, material having an average particle diameter smaller than the average particle diameter of the fabrication powder 30 is used.

Although any material can be used for the fabrication powder 30 if the material can be bound to the surface of the three-dimensional object 32, the material of the small-diameter-particle powder 35 is the same material as the fabrication powder 30. Thus, the small-diameter-particle powder 35 and the fabrication powder 30 are identical in composition.

Further, using the small-diameter-particle powder 35, the material of which is the same as the fabrication powder 30 can reduce surface unevenness of the laminated object without additional processing of the surface of the laminated object. Thus, the surface unevenness of the material that constitutes the laminated object itself can be reduced.

Thus, the present embodiment uses the small-diameter-particle powder 35 having an average particle diameter smaller than the average particle diameter of the fabrication powder 30, the material of which is same with the material of the fabrication powder 30.

Further, the average particle diameter of the small-diameter-particle powder 35 is smaller than the average particle diameter of the fabrication powder 30. If the fabrication process is performed using the fabrication powder 30 having the a greater average particle diameter than the small-diameter-particle powder 35, obtaining the three-dimensional object having a smooth surface similar to the present embodiment is possible without performing the smoothing process.

However, usually the average particle diameter of the fabrication powder 30 is preferably about several tens of micrometers. Fabrication powder having an average particle diameter less than 1/10 (about several micrometer) of the normal average particle diameter of the fabrication powder 30 degrades the fluidity of the fabrication powder 30. Thus, it is difficult to obtain high density in the thin layer of the fabrication powder 30 formed by the recoat roller 20, which results in insufficient mechanical strength of the three-dimensional object. Therefore, fabrication of the three-dimensional object itself becomes difficult.

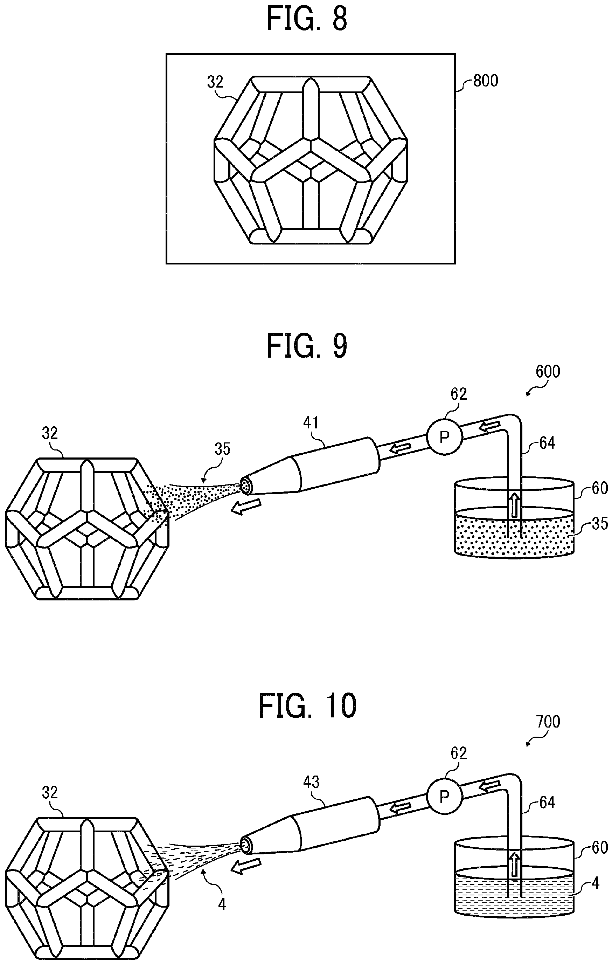

Next, the three-dimensional object 32 coated with the small-diameter-particle powder 35 is transferred to a heating apparatus 800 as illustrated in FIG. 8.

The heating apparatus 800 sinters the un-sintered three-dimensional object 32 coated with the small-diameter-particle powder 35 by heating the un-sintered three-dimensional object 32 (S9 in FIG. 4). By the sintering process, the three-dimensional object 32 is degreased and sintered, and the particles of the fabrication powder 30 are bound and shrunk to become dense inside the three-dimensional object 32. Further, the small-diameter-particle powder 35 is inserted and filled into the concave portion of the unevenness existed on the surface of the three-dimensional object. The small-diameter-particle powder 35 inserted and filled into the concave portion is bound to the fabrication powder 30 on the surface of the three-dimensional object 32. Thus, the unevenness of the surface of the three-dimensional object is reduced, and the surface of the three-dimensional object becomes smooth. Especially, because the sintering process can greatly reduce granular feeling of the small-diameter-particle powder 35, a further smooth surface of the three-dimensional object 32 can be obtained.

FIG. 9 illustrates an example of the small-diameter-particle powder supply apparatus 600 according to the embodiment of the present disclosure.

The small-diameter-particle powder supply apparatus 600 as illustrated in FIG. 9 includes a sprayer to spray the small-diameter-particle powder 35 in a powdery state to the surface of the un-sintered three-dimensional object 32 from a spray nozzle 41. The small-diameter-particle powder supply apparatus 600 includes a tank 60, supply channel 64, and a pump 62. The tank 60 accommodates the small-diameter-particle powder 35. The supply channel 64 and the pump 62 supplies the small-diameter-particle powder 35 to the spray nozzle 41. The pump 62 is provided on the supply channel 64. The pump 62 supplies the small-diameter-particle powder 35 in the tank 60 to the spray nozzle 41 via the supply channel 64.

The small-diameter-particle powder supply apparatus 600 of the present embodiment can supply the powdery small-diameter-particle powder 35 even on the surface portion, which is dead angle from outside the three-dimensional object 32. Because the small-diameter-particle powder 35 can running around the three-dimensional object 32, the small-diameter-particle powder 35 can attach to the dead angle portion of the surface of the three-dimensional object 32.

Therefore, the small-diameter-particle powder supply apparatus 600 of the present embodiment can supply the small-diameter-particle powder 35 the entire surface of the three-dimensional object 32 even the surface of the three-dimensional object 32 has a dead angle. Thus, the small-diameter-particle powder supply apparatus 600 can smooth the entire surface of the three-dimensional object 32.

At this time, the small-diameter-particle powder 35 deposited on the surface of the three-dimensional object 32 may be fallen from the surface of the three-dimensional object 32 before the sintering process. In this case, a pretreatment may be performed before spraying the small-diameter-particle powder 35 on the surface of the three-dimensional object 32 by the spray nozzle 41. The pretreatment supplies an adhesive to the surface of the three-dimensional object 32. For example, the fabrication liquid 4 discharged from the liquid discharge head 2 can be used as an adhesive.

Specifically, as illustrated in FIGS. 9 and 10, first, a spray nozzle 43 of an adhesive spray apparatus 700 sprays the fabrication liquid 4 on the surface of the three-dimensional object 32. Second, the spray nozzle 41 of the small-diameter-particle powder supply apparatus 600 sprays the small-diameter-particle powder 35 on the surface of the three-dimensional object 32.

As illustrated in FIG. 10, the adhesive spray apparatus 700 has a similar configuration with the small-diameter-particle powder supply apparatus 600 as illustrated in FIG. 9. The adhesive spray apparatus acts as a small-diameter-particle powder binder and an adhesive applier. The adhesive spray apparatus 700 includes a tank 60, supply channel 64, and a pump 62. The tank 60 accommodates the fabrication liquid 4. The supply channel 64 and the pump 62 supplies the fabrication liquid 4 to the spray nozzle 43. The pump 62 is provided on the supply channel 64. The pump 62 supplies the fabrication liquid 4 in the tank 60 to the spray nozzle 43 via the supply channel 64.

According to the present configuration, the small-diameter-particle powder 35 deposited on the surface of the three-dimensional object 32 is fixed to the surface of the three-dimensional object 32. Thus, the present embodiment can prevent the small-diameter-particle powder 35 fallen from the surface of the three-dimensional object 32. Further, by falling surplus small-diameter-particle powder 35 form the surface of the three-dimensional object 32, a layer thickness of the small-diameter-particle powder 35 deposited on the surface of the three-dimensional object 32 can be made uniform.

Thereby, unevenness of the dimensional accuracy can be restrained. The unevenness is occurred by the smoothing process of the three-dimensional object 32, which is a process of attaching the small-diameter-particle powder 35 on the surface of the three-dimensional object 32.

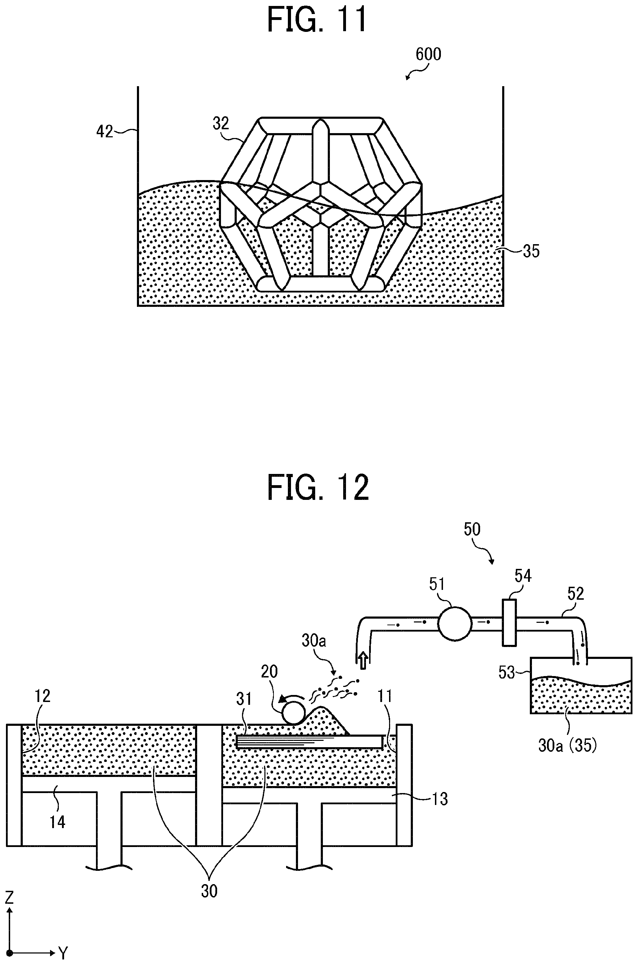

FIG. 11 illustrates an example of the small-diameter-particle powder supply apparatus 600 according to another embodiment of the present disclosure.

The small-diameter-particle powder supply apparatus 600 as illustrated in FIG. 11 stores the small-diameter-particle powder 35 remaining powdery state in a container 42. An un-sintered three-dimensional object 32 is sunk into the small-diameter-particle powder 35 stored in the container 42 to supply the small-diameter-particle powder 35 to the surface of the three-dimensional object 32.

The small-diameter-particle powder supply apparatus 600 of the present embodiment can supply the powdery small-diameter-particle powder 35 even on the surface portion, which is dead angle from outside the three-dimensional object 32. Because the small-diameter-particle powder 35 can operate while running around the three-dimensional object 32, the small-diameter-particle powder 35 can attach to the dead angle portion of the surface of the three-dimensional object 32. Therefore, the small-diameter-particle powder supply apparatus 600 of the present embodiment can supply the small-diameter-particle powder 35 the entire surface of the three-dimensional object 32, even if the surface of the three-dimensional object 32 has a dead angle. Thus, the small-diameter-particle powder supply apparatus 600 can smooth the entire surface of the three-dimensional object 32.

Here, as illustrated in FIG. 10, first, adhesive such as the fabrication liquid 4 is applied to the surface of the three-dimensional object 32. Second, the three-dimensional object 32 is sunk into the small-diameter-particle powder 35 stored in the container 42 in the small-diameter-particle powder supply apparatus 600 of the present embodiment illustrated in FIG. 11. In addition, in this case, by preventing falling of small-diameter-particle powder 35 from the surface of the three-dimensional object 32, a layer thickness of the small-diameter-particle powder 35 deposited on the surface of the three-dimensional object 32 can be made uniform.

Further, a configuration to supply un-sintered small-diameter-particle powder 35 on the surface of the three-dimensional object 32 is not limited to the configurations described above. For example, liquid including the small-diameter-particle powder 35 may be applied to the surface of the three-dimensional object 32. Further, the small-diameter-particle powder 35 can be supplied separately multiple times to the un-sintered surface of the three-dimensional object 32. At this time, a combination of the configurations illustrated in FIG. 9 and FIG. 10 can be used.

Next, a recovery apparatus 50 for recovering the fabrication powder 30 scattered during the forming process of the fabrication layer will be described below.

FIG. 12 is a schematic diagram of the recovery apparatus 50 according to an embodiment of the present disclosure.

Generally, a fabrication powder 30 having a uniform particle diameter as much as possible is used to effectively fabricate a high quality three-dimensional object 32. However, classifying the fabrication powder 30 previously and preparing the fabrication powder having uniform particle size will increase the cost. Therefore, the present embodiment uses a fabrication powder 30 having relatively large variation of particle size distribution. Thus, the fabrication powder 30 in the present embodiment is mixed with a fabrication powder 30, the particle size of which is smaller than the average particle size.

This type of a small-diameter fabrication powder 30 is easier to be raised and scattered by the rotation of the recoat roller 20 during forming the thin layer of fabrication powder 30 over the object layer 31, which is formed by solidifying the fabrication powder 30 with the fabrication liquid 4 discharged from the liquid discharge head 2. Therefore, the present embodiment recovers a scattered fabrication powder 30a having small-diameter, which is raised and scattered by the rotation of the recoat roller 20, by the recovery apparatus 50.

As illustrated in FIG. 12, the recovery apparatus 50 of the present embodiment includes a pump 51, a recovery channel 52, a filter 54, and a recovery container 53. The recovery apparatus 50 suctions the scattered fabrication powder 30a inside the recovery channel 52 by driving the pump 51 and transfer into the recovery container 53 through the recovery channel 52. The present embodiment recovers the scattered fabrication powder 30a by the recovery apparatus 50.

Thus, the variation of particle diameter distribution of the fabrication powder 30 can be reduced, even when the fabrication powder 30 having a relatively large variation of particle diameter distribution is used for fabricating the three-dimensional object 32 in the fabrication chamber 11. Therefore, a high-quality three-dimensional object 32 can be fabricated even when the fabrication powder 30, which is not previously classified, is used.

Further, the scattered fabrication powder 30a transferred to the recovery container 53 can be used as a small-diameter-particle powder 35 for the smoothing process because the particle diameter of the scattered fabrication powder 30a is smaller than the average diameter of the fabrication powder 30 used in the fabrication of the three-dimensional object 32 in the fabrication chamber 11. Thus, the present embodiment has an advantage of effectively utilizing the scattered fabrication powder 30a for the smoothing process without discarding the scattered fabrication powder 30a that is not suitable for fabricating the three-dimensional object 32. The filter 54 such as a classification filter is provided in the recovery channel 52. The filter 54 screens particles having a particle diameter, which can be used as the small-diameter-particle powder 35 in the smoothing process, from the scattered fabrication powder 30a.

## Claims

1. A system for the fabrication of a three-dimensional object (601), the system comprising an apparatus, a fabrication powder, and a small-diameter-particle powder, wherein the apparatus comprises:
a small-diameter-particle powder supplier (600) to supply small-diameter-particle powder (35) to a surface of an object (32) formed by binding fabrication powder (30) with fabrication liquid (4), and
a small-diameter-particle powder binder (700) to bind the small-diameter-particle powder (35) on the surface of the object (32); wherein:
the small-diameter-particle powder (35) and the fabrication powder (30) are identical in composition, and
an average particle diameter of the small-diameter-particle powder (35) is smaller than an average particle diameter of the fabrication powder (30).

2. The system as claimed in claim 1, wherein the small-diameter-particle powder binder (700) includes an adhesive applier (700) to apply adhesive (4), which adheres the small-diameter-particle powder (35) on the surface of the object (32), before supplying the small-diameter-particle powder (35) on the surface of the object (32) by the small-diameter-particle powder supplier (600).

3. The system as claimed in claim 2, wherein the adhesive (4) includes a binding agent to bind particles of the fabrication powder (30).

4. The system as claimed in any one of claims 1 to 3, further comprising:
a heater (800) to heat a surface of the object, on which the small-diameter-particle powder (35) is supplied,
wherein the heater (800) sinters the small-diameter-particle powder (35) on the surface of the object (32) and heats the surface of the object (32) to bind the small-diameter-particle powder to the surface of the object (32).

5. The system as claimed in any one of claims 1 to 4, wherein a small-diameter-particle powder supplier (600) includes a sprayer (41) to spray the small-diameter-particle powder (35) on the surface of the object (32).

6. The system as claimed in any one of claims 1 to 4, wherein a small-diameter-particle powder supplier (600) includes a container (60) to store the small-diameter-particle powder (35), and
the container (60) accommodates the object (32) inside the container (60) to supply the small-diameter-particle powder (35) to the surface of the object (32).

7. The system as claimed in any one of claims 1 to 6, further comprising a recovery apparatus (50) to recover the fabrication powder (30) scattered during forming the object (32),
wherein the small-diameter-particle powder supplier (600) utilizes the fabrication powder recovered by the recovery apparatus (50), and having a smaller average particle diameter than the fabrication powder, as the small-diameter-particle powder (35).

8. A method for fabricating a three-dimensional object, the method comprising:
binding particles of a fabrication powder (30) to form an object (32),
supplying a small-diameter-particle powder (35) to a surface of the object (32), and
binding the small-diameter-particle powder (35) to the surface of the object (32);
wherein the small-diameter-particle powder (35) and the fabrication powder (30) have an identical composition, and
an average particle diameter of the small-diameter-particle powder (35) is smaller than an average particle diameter of the fabrication powder (30).

9. The method as claimed in claim 8, further comprising applying adhesive (4) that adheres the small-diameter-particle powder (35) to the surface of the object (32) before supplying the small-diameter-particle powder (35) on the surface of the object (32).

10. The method as claimed in claim 9, wherein the adhesive (4) includes a binding agent to bind particles of the fabrication powder (30).

11. The method as claimed in any one of claims 8 to 10, further comprising:
heating the surface of the object (32), on which the small-diameter-particle powder (35) is supplied, to sinter the small-diameter-particle powder (35) on the surface of the object (32); and
binding the small-diameter-particle powder (35) to the surface of the object (32) by heating the surface of the object (32).

12. The method as claimed in any one of claims 8 to 11, wherein the supplying of the small-diameter-particle powder (35) includes spraying the small-diameter-particle powder (35) on the surface of the object (32).

13. The method as claimed in any one of claims 8 to 11, wherein the supplying of the small-diameter-particle powder (35) includes:
storing the small-diameter-particle powder (35); and
accommodating the object (32) inside a container (42) to supply the small-diameter-particle powder (35) to the surface of the object (32).

## Patentansprüche

1. System zur Herstellung eines dreidimensionalen Objekts (601), wobei das System eine Vorrichtung, ein Herstellungspulver und ein Pulver von Teilchen mit kleinem Durchmesser umfasst, wobei die Vorrichtung Folgendes umfasst:
eine Zufuhrvorrichtung (600) für Pulver von Teilchen mit kleinem Durchmesser, um Pulver (35) von Teilchen mit kleinem Durchmesser einer Oberfläche eines Objekts (32) zuzuführen, das durch Binden von Herstellungspulver (30) mit einer Herstellungsflüssigkeit (4) geformt wird, und,
eine Bindevorrichtung (700) für Pulver von Teilchen mit kleinem Durchmesser, um das Pulver (35) von Teilchen mit kleinem Durchmesser an die Oberfläche des Objekts (32) zu binden, wobei:
das Pulver (35) von Teilchen mit kleinem Durchmesser und das Herstellungspulver (30) in der Zusammensetzung identisch sind und
ein mittlerer Teilchendurchmesser des Pulvers (35) von Teilchen mit kleinem Durchmesser kleiner ist als ein mittlerer Teilchendurchmesser des Herstellungspulvers (30).

2. System nach Anspruch 1, wobei die Bindevorrichtung (700) für Pulver von Teilchen mit kleinem Durchmesser eine Klebstoff-Auftragsvorrichtung (700) einschließt, um, vor dem Zuführen des Pulvers (35) von Teilchen mit kleinem Durchmesser auf die Oberfläche des Objekts (32) durch die Zufuhrvorrichtung (600) für Pulver von Teilchen mit kleinem Durchmesser, Klebstoff (4) aufzutragen, der das Pulver (35) von Teilchen mit kleinem Durchmesser auf die Oberfläche des Objekts (32) klebt.

3. System nach Anspruch 2, wobei der Klebstoff (4) ein Bindemittel einschließt, um Teilchen des Herstellungspulvers (30) zu binden.

4. System nach einem der Ansprüche 1 bis 3, das ferner Folgendes umfasst:
eine Heizvorrichtung (800), um eine Oberfläche des Objekts auf die das das Pulver (35) von Teilchen mit kleinem Durchmesser zugeführt wird, zu erwärmen,
wobei die Heizvorrichtung (800) das Pulver (35) von Teilchen mit kleinem Durchmesser auf der Oberfläche des Objekts (32) sintert und die Oberfläche des Objekts (32) erwärmt, um das Pulver (35) von Teilchen mit kleinem Durchmesser an die Oberfläche des Objekts (32) zu binden.

5. System nach einem der Ansprüche 1 bis 4, wobei eine Zufuhrvorrichtung (600) für Pulver von Teilchen mit kleinem Durchmesser eine Sprühvorrichtung (141) einschließt, um das Pulver (35) von Teilchen mit kleinem Durchmesser auf die Oberfläche des Objekts (32) zu sprühen.

6. System nach einem der Ansprüche 1 bis 4, wobei eine Zufuhrvorrichtung (600) für Pulver von Teilchen mit kleinem Durchmesser einen Behälter (60) einschließt, um das Pulver (35) von Teilchen mit kleinem Durchmesser zu speichern, und
der Behälter (60) das Objekt (32) innerhalb des Behälters (60) aufnimmt, um das Pulver (35) von Teilchen mit kleinem Durchmesser der Oberfläche des Objekts (32) zuzuführen.

7. System nach einem der Ansprüche 1 bis 6, das ferner eine Rückgewinnungsvorrichtung (50) umfasst, um das Herstellungspulver (30) zurückzugewinnen, das während des Formens des Objekts (32) gestreut wird,
wobei die Zufuhrvorrichtung (600) für Pulver von Teilchen mit kleinem Durchmesser das Herstellungspulver, das durch die Rückgewinnungsvorrichtung (50) zurückgewonnen wird und einen kleineren mittleren Teilchendurchmesser aufweist als das Herstellungspulver, als das Pulver (35) von Teilchen mit kleinem Durchmesser benutzt.

8. Verfahren zur Herstellung eines dreidimensionalen Objekts, wobei das Verfahren Folgendes umfasst:
Binden von Teilchen eines Herstellungspulvers (30), um ein Objekt (32) zu formen,
Zuführen eines Pulvers (35) von Teilchen mit kleinem Durchmesser zu einer Oberfläche des Objekts (32) und
Binden des Pulvers (35) von Teilchen mit kleinem Durchmesser an die Oberfläche des Objekts (32),
wobei das Pulver (35) von Teilchen mit kleinem Durchmesser und das Herstellungspulver (30) eine identische Zusammensetzung aufweisen und
ein mittlerer Teilchendurchmesser des Pulvers (35) von Teilchen mit kleinem Durchmesser kleiner ist als ein mittlerer Teilchendurchmesser des Herstellungspulvers (30).

9. Verfahren nach Anspruch 8, das ferner das Aufbringen eines Klebstoffs (4), der das Pulver (35) von Teilchen mit kleinem Durchmesser auf die Oberfläche des Objekts (32) klebt, vor dem Zuführen des Pulvers (35) von Teilchen mit kleinem Durchmesser auf die Oberfläche des Objekts (32) umfasst.

10. Verfahren nach Anspruch 9, wobei der Klebstoff (4) ein Bindemittel einschließt, um Teilchen des Herstellungspulvers (30) zu binden.

11. Verfahren nach einem der Ansprüche 8 bis 10, das ferner Folgendes umfasst:
Erwärmen der Oberfläche des Objekts (32), der das Pulver (35) von Teilchen mit kleinem Durchmesser zugeführt wird, um das Pulver (35) von Teilchen mit kleinem Durchmesser auf der Oberfläche des Objekts (32) zu sintern, und
Binden des Pulvers (35) von Teilchen mit kleinem Durchmesser an die Oberfläche des Objekts (32) durch Erwärmen der Oberfläche des Objekts (32).

12. Verfahren nach einem der Ansprüche 8 bis 11, wobei das Zuführen des Pulvers (35) von Teilchen mit kleinem Durchmesser das Sprühen des Pulvers (35) von Teilchen mit kleinem Durchmesser auf die Oberfläche des Objekts (32) einschließt.

13. Verfahren nach einem der Ansprüche 8 bis 11, wobei das Zuführen des Pulvers (35) von Teilchen mit kleinem Durchmesser Folgendes einschließt:
Speichern des Pulvers (35) von Teilchen mit kleinem Durchmesser und
Aufnehmen des Objekts (32) innerhalb eines Behälters (42), um das Pulver (35) von Teilchen mit kleinem Durchmesser der Oberfläche des Objekts (32) zuzuführen.

## Revendications

1. Système de fabrication d'un objet tridimensionnel (601), le système comprenant un appareil, une poudre de fabrication, et une poudre de particules à petit diamètre, dans lequel l'appareil comprend :
un moyen d'amenée de la poudre de particules à petit diamètre (600) pour amener la poudre de particules à petit diamètre (35) sur une surface d'un objet (32) formé en liant la poudre de fabrication (30) avec un liquide de fabrication (4) ; et
un liant de la poudre de particules à petit diamètre (700) pour lier la poudre de particules à petit diamètre (35) sur la surface de l'objet (32) ; dans lequel :
la poudre de particules à petit diamètre (35) et la poudre de fabrication (30) ont une composition identique ; et
un diamètre moyen des particules de la poudre de particules à petit diamètre (35) est inférieur à un diamètre moyen des particules de la poudre de fabrication (30).

2. Système selon la revendication 1, dans lequel le liant de la poudre de particules à petit diamètre (700) inclut un applicateur d'adhésif (700) pour appliquer un adhésif (4) qui fait adhérer la poudre de particules à petit diamètre (35) sur la surface de l'objet (32), avant d'amener la poudre de particules à petit diamètre (35) sur la surface de l'objet (32) par l'intermédiaire du moyen d'amenée de la poudre de particules à petit diamètre (600).

3. Système selon la revendication 2, dans lequel l'adessif (4) inclut un agent de liaison pour lier les particules de la poudre de fabrication (30).

4. Système selon l'une quelconque des revendications 1 à 3, comprenant en outre :
un dispositif de chauffage (800) pour chauffer une surface de l'objet, sur laquelle la poudre de particules à petit diamètre (35) est amenée ;
dans lequel le dispositif de chauffage (800) assure le frittage de la poudre de particules à petit diamètre (35) sur la surface de l'objet (32) et chauffe la surface de l'objet (32) pour lier la poudre de particules à petit diamètre sur la surface de l'objet (32).

5. Système selon l'une quelconque des revendications 1 à 4, dans lequel un moyen d'amenée de la poudre de particules à petit diamètre (600) inclut un pulvérisateur (41) pour pulvériser la poudre de particules à petit diamètre (35) sur la surface de l'objet (32).

6. Système selon l'une quelconque des revendications 1 à 4, dans lequel un moyen d'amenée de la poudre de particules à petit diamètre (600) inclut un récipient (60) pour stocker la poudre de particules à petit diamètre (35) ; et
le récipient (60) reçoit l'objet (32) à l'intérieur du récipient (60) pour amener la poudre de particules à petit diamètre (35) sur la surface de l'objet (32).

7. Système selon l'une quelconque des revendications 1 à 6, comprenant en outre :
un appareil de récupération (50) pour récupérer la poudre de fabrication (30) dispersée au cours de la formation de l'objet (32) ;
dans lequel le moyen d'amenée de la poudre de particules à petit diamètre (600) utilise la poudre de fabrication récupérée par l'appareil de récupération (50), et ayant un diamètre moyen de particules inférieur à celui de la poudre de fabrication, en tant que poudre de particules à petit diamètre (35).

8. Procédé de fabrication d'un objet tridimensionnel, le procédé comprenant les étapes ci-dessous :
liaison des particules d'une poudre de fabrication (30) pour former un objet (32) ;
amenée de la poudre de particules à petit diamètre (35) sur une surface de l'objet (32) ;
liaison de la poudre de particules à petit diamètre (35) sur la surface de l'objet (32) ;
dans lequel la poudre de particules à petit diamètre (35) et la poudre de fabrication (30) ont une composition identique ; et
un diamètre moyen des particules de la poudre de particules à petit diamètre (35) est inférieur à un diamètre moyen des particules de la poudre de fabrication (30).

9. Procédé selon la revendication 8, comprenant en outre l'étape d'application d'un adhésif (4) faisant adhérer la poudre de particules à petit diamètre (35) sur la surface de l'objet (32) avant l'application de la poudre de particules à petit diamètre (35) sur la surface de l'objet (32).

10. Procédé selon la revendication 9, dans lequel l'adhésif (4) inclut un agent de liaison pour lier les particules de la poudre de fabrication (30).

11. Procédé selon l'une quelconque des revendications 8 à 10, comprenant en outre les étapes ci-dessous :
chauffage de la surface de l'objet (32) sur laquelle est amenée la poudre de particules à petit diamètre (35), pour fritter la poudre de particules à petit diamètre (35) sur la surface de l'objet (32) ; et
liaison de la poudre de particules à petit diamètre (35) sur la surface de l'objet (32) en chauffant la surface de l'objet (32).

12. Procédé selon l'une quelconque des revendications 8 à 11, dans lequel l'étape d'amenée de la poudre de particules à petit diamètre (35) inclut la pulvérisation de la poudre de particules à petit diamètre (35) sur la surface de l'objet (32).

13. Procédé selon l'une quelconque des revendications 8 à 11, dans lequel l'étape d'amenée de la poudre de particules à petit diamètre (35) inclut les étapes ci-dessous :
stockage de la poudre de particules à petit diamètre (35) ; et
réception de l'objet (32) à l'intérieur d'un récipient (42) pour amener la poudre de particules à petit diamètre (35) sur la surface de l'objet (32).
